## Europäisches Patentamt

## European Patent Office

## Office européen des brevets

(11) Publication number: **0 174 800**
**B1**

(12) **EUROPEAN PATENT SPECIFICATION**

(45) Date of publication of patent specification: **19.11.87**

(51) Int. Cl.⁴: **B 60 H 1/00**

(21) Application number: **85306288.3**

(22) Date of filing: **05.09.85**

(54) A valve.

(30) Priority: **05.09.84 GB 8422373**

(43) Date of publication of application:
**19.03.86 Bulletin 86/12**

(45) Publication of the grant of the patent:
**19.11.87 Bulletin 87/47**

(84) Designated Contracting States:
**DE FR GB IT NL SE**

(56) References cited:
**DE-A-1 916 640**
**DE-A-2 257 213**
**DE-A-2 903 296**
**GB-A-1 257 164**
**US-A-3 477 498**
**US-A-3 498 332**

(73) Proprietor: **AUSTIN ROVER GROUP LIMITED**
**Fletchamstead Highway**
**Canley Coventry CV4 9DB (GB)**

(72) Inventor: **Brown, David Geoffrey**
**Whistlers South Leigh**
**Witney Oxon OX8 6XQ (GB)**
Inventor: **Cook, John**
**6 Wenman Road**
**Witney Oxon (GB)**

(74) Representative: **Unwin, Stephen Geoffrey et al**
**ARG Patent Department Cowley Body Plant**
**Oxford OX4 5NL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a valve.

In a conventional heater unit of a motor vehicle, hot water from an engine cooling system is supplied to a heat exchanger by a valve which can be manually opened and closed by a lever system. When the valve is open hot water from the engine cooling system is circulated through the heat exchanger to heat air which is to be blown into the interior of the vehicle. By adjusting the valve the temperature of the air to be blown into the interior of the vehicle can be crudely controlled. However, the temperature of the water from the engine cooling system varies in dependence upon the conditions under which the engine is operated and tends to rise when the engine is under load or when air flow through the vehicle radiator is reduced. It is, therefore, difficult to maintain the air supplied by the heater to the interior of the vehicle at any chosen temperature.

According to the present invention there is provided a valve comprising: a first inlet and a first outlet in communication with each other; a second inlet and a second outlet; a movable member movable between a first position in which it restricts communication between the first inlet and the second outlet and permits communication between the second inlet and the second outlet and a second position in which it restricts communication between the second inlet and the second outlet and permits communication between the first inlet and the second outlet; biasing means for biasing the movable member towards the first position; and drive means for moving the movable member towards the second position against the action of the biasing means.

Preferred features of the invention will be apparent from the subsidiary claims of the application.

The invention will now be described, merely by way of example, with reference to the accompanying drawings, in which:

Figure 1 is a cross-sectional view of one embodiment of a valve according to the invention;

Figure 2 is a graph illustrating operation of the valve; and

Figure 3 is a graph showing operation of the valve when used to control a heater unit.

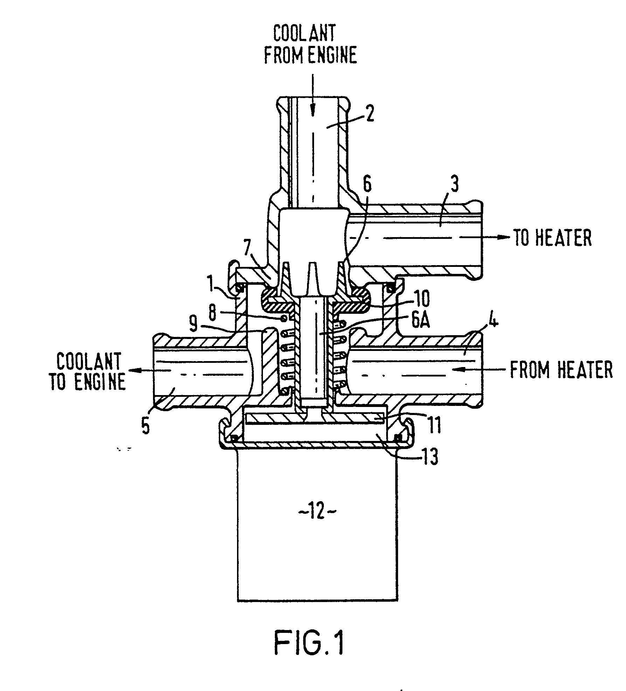

The valve shown in Figure 1 is a valve connected to supply coolant water from a cooling system of an internal combustion engine to a heater unit of a motor vehicle. The invention will be described in relation to such a valve but it will be appreciated that the invention is equally applicable to valves used in other applications.

The illustrated valve comprises an outer casing 1 with a first inlet 2 connected to receive water from a cooling system (not shown) of an internal combustion engine, a first outlet 3 connected to supply the water to a heater unit (not shown), a second inlet 4 connected to receive water returning from the heater unit, and a second outlet 5 connected to return water to the cooling system of the internal combustion engine. The first inlet 2 is in direct communication with the first outlet 3. Communication between the first and second inlets 2 and 4 and the second outlet 5 is, however, controlled by a poppet valve 6. In the position shown in Figure 1, the poppet valve 6 is pressed against a first valve seat 7 by a spring 8 around the valve stem 6A to restrict communication between the first inlet 2 and the second outlet 5. In this position, the poppet valve 6 is lifted off the second valve seat 9 so that communication is permitted between the second inlet 4 and the second outlet 5. The poppet valve 6 is provided with a double-sided rubber seal 10 for sealing against the first and second valve seats 7 and 9. A soft iron disc 11 is attached to the end of the valve stem 6A. To move the poppet valve 6 away from the first valve seat 7 and towards the second valve seat 9, a solenoid 12 mounted outside the outer casing 1 is actuated to attract the soft iron disc 11. As the soft iron disc 11 is attracted towards the solenoid 12, it pulls the poppet valve 6 away from the first valve seat 7 against the action of the spring 8 until the seal 10 is pressed against the second valve seat 9. In this position (which is not illustrated), communication between the second inlet 4 and the second outlet 5 is restricted and communication is permitted between the first inlet 2 and the second outlet 5.

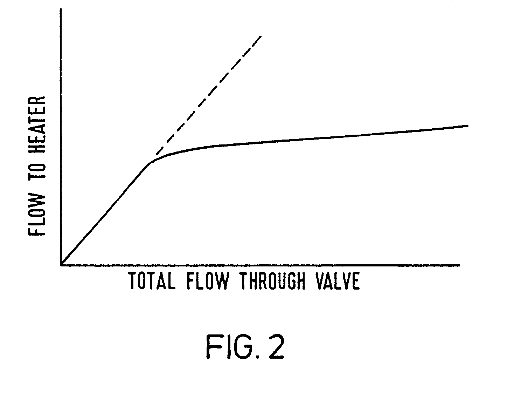

In operation, the valve supplies hot water to a heat exchanger of an air heater unit via the first outlet 3 and it passes water returning from the heater unit back to the engine cooling system via the second inlet 4 and the second outlet 5 when the poppet valve 6 is in the position illustrated in Figure 1. If the pressure of water supplied to the first inlet 2 rises due to an increase in engine speed, the pressure lifts the poppet valve 6 off the first valve seat 7 so that excess water flow is by-passed back to the engine through the second outlet 5 without being circulated through the heater unit. It will be appreciated that as the poppet valve 6 gradually moves away from the first valve seat 7 to permit communication between the first inlet 2 and the second outlet 5, communication between the second inlet 4 and the second outlet 5 is at the same time gradually restricted. By this means, the flow rate of water through the heater unit can be maintained substantially constant regardless of engine speed once the speed has risen above a predetermined speed such as idling speed. The spring rate of the spring 8 is, of course, selected in dependence upon the desired flow rate through the heater unit. It will be appreciated that if the seal 10 is pressed against the second valve seat 9, all water entering the first inlet 2 is by-passed through the valve to the second outlet 5 and circulation of water through the heater unit is shut off. The graph shown in Figure 2 illustrates the relationship between the flow of water to the heater unit and the total flow of water through the valve. As will be seen, the flow through the heater unit is substantially constant once it has reached a predetermined level.

The control of flow rate of water through the heater unit described above does not, however, provide a sufficiently fine control of the temperature of air emitted by the heater unit since, as mentioned above, the temperature of the engine coolant water varies with the conditions under which the engine is operated. In order to provide the fine control required, the temperature of the air emitted by the heater unit is sensed and the solenoid 12 is actuated at intervals to shut off the circulation of water through the heater unit. Thus, if the temperature sensed is above a predetermined temperature the solenoid 12 is actuated to stop the flow of water through the heater unit until the temperature drops whereupon the solenoid 12 is de-actuated so that the poppet valve 6 returns to the position illustrated in Figure 1 and water again circulates through the heater unit.

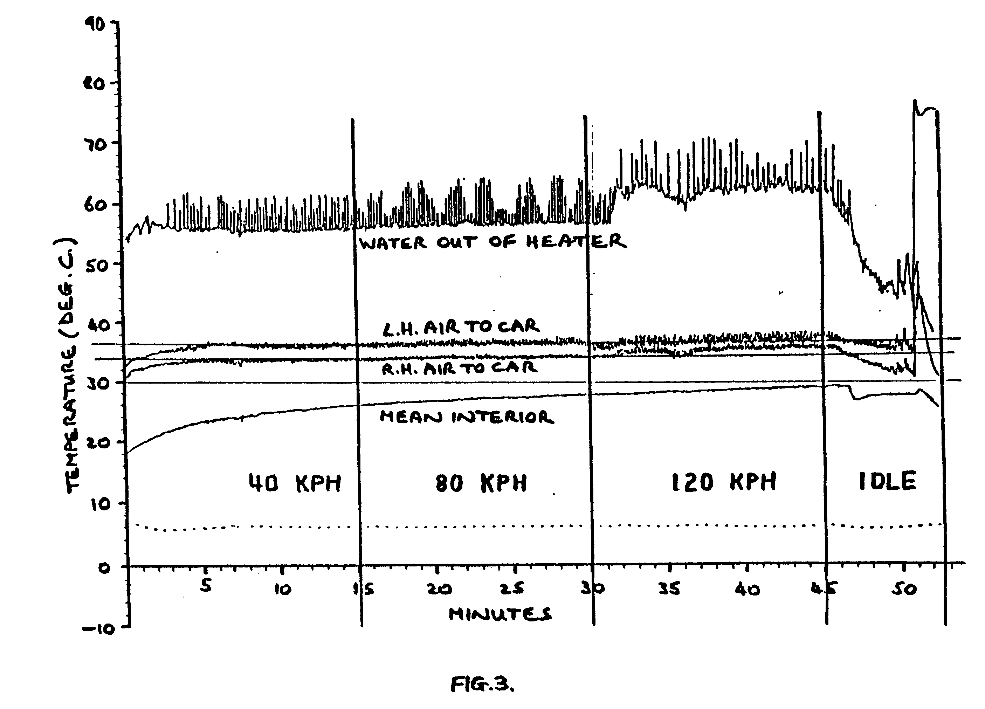

It has been found that if the solenoid 12 is periodically actuated to open and shut the communication between the second inlet 4 and the second outlet 5 for intervals of between 5 and 60 seconds at a rate of up to 6 cycles per minute in dependence upon the predetermined temperature required and the sensed temperature, the air emitted from the heater unit can be maintained within 3°C of a desired temperature despite changes in engine speed and load and changes in outside temperature. The graph shown in Figure 3 illustrates the changes in temperature of water leaving the heater unit and the temperature of air emitted by right hand and left hand vents of the heater unit as engine speed is increased. It will be seen that the temperature of air emitted by the heater is maintained substantially at a predetermined level regardless of engine speed. The many small fluctuations in the curves illustrated are, of course, due to the flow of water through the heater being repeatedly shut off by actuation of the solenoid 12. The heater system may, of course, be provided with a control for setting the predetermined temperature or for adjusting this temperature as required.

As the poppet valve 6 operates in a force balanced manner, i.e. its position between the two valve seats 7 and 9 is determined by the balance between the forces on it due to compression of the spring 8 and the pressure of water supplied to the first inlet 2, the force required to move the poppet valve 6 towards the second valve seat 9 is very low so only a low power solenoid 12 is required. It should also be noted that the force acting on the soft iron disc 11 due to actuation of the solenoid 12 increases with the inverse square of the distance between the disc 11 and the solenoid 12 so that once the poppet valve 6 starts to move towards the second valve seat 9 it rapidly and reliably moves to shut off the circulation through the heater unit since the opposing force due to compression of the spring 8 only increases linearly with the decrease in distance between the disc 11 and the solenoid 12. In the illustrated embodiment, the soft iron disc 11 is positioned in a chamber 13 which is in communication with water received through the second inlet 4. Movement of the disc 11 in the chamber 13 towards and away from the solenoid 12 is therefore damped and this prevents the poppet valve 6 from vibrating between the first and second valve seats 7 and 9.

It will be appreciated that the electronically controlled valve described above is particularly suitable for use in a remote control or fully automatic temperature control system of a motor vehicle. The valve can be operated to control the flow of water to the heater unit in dependence upon signals received from temperature sensors such as fine bead thermistors measuring the temperature of air emitted from the heater unit or in dependence upon signals received from other sensing means. The valve can also be used to automatically control the temperature of the air within a motor vehicle by sensing interior and exterior temperatures.

As previously mentioned, a valve according to this invention may be used in other applications besides that described above to control the flow of fluid to a component connected to the first outlet 3 and the second inlet 4.

**Claims**

1. A valve comprising: a first inlet (2) and a first outlet (3) in communication with each other; a second inlet (4) and a second outlet (5); a movable member (6) movable between a first position in which it restricts communication between the first inlet (2) and the second outlet (5) and permits communication between the second inlet (4) and the second outlet (5) and a second position in which it restricts communication between the second inlet (4) and the second outlet (5) and permits communication between the first inlet (2) and the second outlet (5); biasing means (8) for biasing the movable member (6) towards the first position such that, in use, the position of the movable member (6) is determined by a balance between pressure within the first inlet (2) and the action of the biasing means (8) so that once the said pressure reaches a predetermined level the flow rate of fluid from the first inlet (2) to the first outlet (3) is maintained substantially constant; and drive means (12) for overriding the said balance to move the movable member (6) towards the second position against the action of the biasing means (8).

2. A valve as claimed in claim 1 in which operation of the drive means (12) is electronically controlled.

3. A valve as claimed in claim 2 in which the drive means (12) is actuated in dependence upon a signal received from sensing means.

4. A valve as claimed in claim 2 or 3 in which at least part (11) of the movable member (6) is formed from a magnetic material and the drive means comprises a solenoid (12).

5. A valve as claimed in claim 4 in which the said part (11) is a disc which, in use, damps the motion of the movable member (6).

6. A valve as claimed in any preceding claim in which all moving parts (6, 11) are contained within an outer casing (1).

7. A valve as claimed in claim 6 when dependent on claim 4 or 5 in which the solenoid (12) is mounted outside the outer casing (1).

8. A valve as claimed in any preceding claim in which the movable member comprises a poppet valve (6) movable between a first valve seat (7) in the first position and a second valve seat (9) in the second position.

9. A valve as claimed in claim 8 in which the biasing means comprises a spring (8) around a stem (6A) of the poppet valve (6).

10. A valve as claimed in any preceding claim in which the first inlet (2) is connected to a source of fluid, the first outlet (3) is connected to supply fluid to a component, and the second inlet (4) is connected to receive fluid returning from the component such that, in use, once the said pressure reaches the predetermined level the flow rate of fluid from the first inlet (2) to the first outlet (3) is maintained substantially constant but is substantially cut-off whenever the drive means (12) is actuated to override the said balance and move the movable member (6) towards the second position.

11. A valve as claimed in claim 10 in which the component is a heat exchanger of a heater unit.

12. A valve as claimed in claim 11 when dependent upon claim 3 in which the sensing means senses temperature and the drive means (12) is actuated at intervals to control flow of fluid through the heat exchanger whereby the sensing means is maintained substantially at a predetermined temperature.

13. A valve as claimed in any of claims 11 and 12 in which the heat exchanger forms part of a heater unit of a motor vehicle, the first fluid inlet (2) being connected to receive water from a cooling circuit of the vehicle engine.

**Patentansprüche**

1. Ventil mit: einem ersten Einlaß (2) und einem ersten Auslaß (3), die miteinander kommunizieren; einem zweiten Einlaß (4) und einem zweiten Auslaß (5); einem beweglichen Element (6), das zwischen einer ersten Stellung, in der es die Kommunikation zwischen dem ersten Einlaß (2) und dem zweiten Auslaß (5) einschränkt und eine Kommunikation zwischen dem zweiten Einlaß (4) und dem zweiten Auslaß (5) gestattet, sowie einer zweiten Stellung, in der es die Kommunikation zwischen dem zweiten Einlaß (4) und dem zweiten Auslaß (5) einschränkt und eine Kommunikation zwischen dem ersten Einlaß (2) und dem zweiten Auslaß (5) gestattet, bewegbar ist; einer Vorspanneinrichtung (8) zum Vorspannen des beweglichen Elements (6) in Richtung auf die erste Stellung in einer derartigen Weise, daß im Einsatz die Position des beweglichen Elements (6) durch ein Gleichgewicht zwischen dem innerhalb des ersten Einlasses (2) vorhandenen Druck und der Wirkung der Vorspanneinrichtung (8) bestimmt ist, so daß dann, sobald besagter Druck ein vorbestimmtes Niveau erreicht, die Fluidströmungsrate von dem ersten Einlaß (2) zu dem ersten Auslaß (3) im wesentlichen konstant gehalten wird; und mit einer Antriebseinrichtung (12) zum Überwinden des besagten Gleichgewichts zur Bewegung des beweglichen Elements (6) in Richtung auf die zweite Stellung gegen die Wirkung der Vorspanneinrichtung (8).

2. Ventil nach Anspruch 1, dadurch gekennzeichnet, daß der Betrieb der Antriebseinrichtung (12) elektronisch gesteuert wird.

3. Ventil nach Anspruch 2, dadurch gekennzeichnet, daß die Antriebseinrichtung (12) in Abhängigkeit von einem von einer Erfassungseinrichtung empfangenen Signal betätigt wird.

4. Ventil nach Anspruch 2 oder 3, dadurch gekennzeichnet, daß wenigstens ein Teil (11) des beweglichen Elements (6) aus einem magnetischen Material gebildet ist und die Antriebseinrichtung ein Solenoid (12) aufweist.

5. Ventil nach Anspruch 4, dadurch gekennzeichnet, daß es sich bei dem besagten Teil (11) um eine Scheibe handelt, die im Einsatz die Bewegung des beweglichen Elements (6) dämpft.

6. Ventil nach einem der vorausgehenden Ansprüche, dadurch gekennzeichnet, daß alle beweglichen Teile (6, 11) innerhalb eines äußeren Gehäuses (1) enthalten sind.

7. Ventil nach Anspruch 6 bei dessen Abhängigkeit von Anspruch 4 oder 5, dadurch gekennzeichnet, daß das Solenoid (12) außerhalb des äußeren Gehäuses (1) angebracht ist.

8. Ventil nach einem der vorausgehenden Ansprüche, dadurch gekennzeichnet, daß das bewegliche Element ein Tellerventil (6) umfaßt, das zwischen einem ersten Ventilsitz (7) in der ersten Stellung und einem zweiten Ventilsitz (9) in der zweiten Stellung bewegbar ist.

9. Ventil nach Anspruch 8, dadurch gekennzeichnet, daß die Vorspanneinrichtung eine um einen Schaft (6A) des Tellerventils (6) herum angeordnete Feder (8) umfaßt.

10. Ventil nach einem der vorausgehenden Ansprüche, dadurch gekennzeichnet, daß der erste Einlaß (2) mit einer Fluidquelle verbunden ist, daß der erste Auslaß (3) zur Zufuhr von Fluid zu einem Bauteil angeschlossen ist und daß der zweite Einlaß (4) zum Erhalt von von dem Bauteil zurückkehrendem Fluid angeschlossen ist, so daß im Einsatz dann, sobald besagter Druck das vorbestimmte Niveau erreicht, die Fluidströmungsrate von dem ersten Einlaß (2) zu dem ersten Auslaß (3) im wesentlichen konstant gehalten wird, jedoch immer dann im wesentlichen abgeschnitten wird, wenn die Antriebseinrichtung (12) zur Überwindung des besagten Gleichgewichts und Bewegung des beweglichen Elements (6) in Richtung auf die zweite Stellung betätigt wird.

11. Ventil nach Anspruch 10, dadurch gekennzeichnet, daß es sich bei dem Bauteil um einen Wärmetauscher einer Heizeinheit handelt.

12. Ventil nach Anspruch 11 bei dessen Abhängigkeit von Anspruch 3, dadurch gekennzeichnet, daß die Erfassungseinrichtung die Temperatur erfaßt und die Antriebseinrichtung (12) zur Steuerung der Fluidströmung durch den Wärmetauscher in Intervallen betätigt wird, wodurch die Erfassungseinrichtung im wesentlichen auf einer vorbestimmten Temperatur gehalten wird.

13. Ventil nach einem der Ansprüche 11 und 12, dadurch gekennzeichnet, daß der Wärmetauscher Teil einer Heizeinheit eines Kraftfahrzeugs bildet und der erste Fluideinlaß (2) zum Erhalt von Wasser von einem Kühlkreis des Fahrzeugmotors angeschlossen ist.

**Revendications**

1. Soupape comprenant une première entrée (2) et une première sortie (3) en communication entre elles; une deuxième entrée (4) et une deuxième sortie (5); un élément mobile (6) qui peut se déplacer entre une première position dans laquelle il restreint la communication entre la première entrée (2) et la deuxième sortie (5) et établit la communication entre la deuxième entrée (4) et la deuxième sortie (5) et une deuxième position, dans laquelle il restreint la communication entre la deuxième entrée (4) et la deuxième sortie (5) et établit la communication entre la première entrée (2) et la deuxième sortie (5); des moyens de rappel (8) servant à rappeler l'élément mobile (6) vers la première position de telle manière que, en utilisation, la position de l'élément mobile (6) est déterminée par un équilibre entre la pression régnant dans la première entrée (2) et l'action des moyens de rappel (8), et qui à partir du moment où ladite pression atteint un niveau prédéterminé, le débit de fluide allant de la première entrée (2) à la première sortie (3) est maintenu à peu près constant; et des moyens moteurs (12) servant à dépasser ledit équilibre pour déplacer l'élément mobile (6) vers la deuxième position à l'encontre des moyens de rappel (8).

2. Soupape selon la revendication 1, dans laquelle le fonctionnement des moyens moteurs (12) est commandé par voie électronique.

3. Soupape selon la revendication 2, dans laquelle les moyens moteurs (12) sont actionnés en fonction d'un signal reçu en provenance de moyens capteurs.

4. Soupape selon la revendication 2 ou 3, caractérisé en ce qu'au moins une partie (11) de l'élément mobile (6) est faite d'une matière magnétique et en ce que les moyens moteurs comprennent un électro-aimant (12).

5. Soupape selon la revendication 4, caractérisée en ce que ladite partie (11) est un disque qui, en utilisation, amortit le mouvement de l'élément mobile (6).

6. Soupape selon l'une quelconque des revendications précédentes, dans laquelle toutes les pièces mobiles (6, 11) sont contenues à l'intérieur d'un corps extérieur (11).

7. Soupape selon la revendication 6, rattachée à la revendication 4 ou à la revendication 5, dans laqeulle l'électro-aimant (12) est monté à l'extérieur du corps extérieur (1).

8. Soupape selon l'une quelconque des revendications précédentes, dans laquelle l'élément mobile comprend un clapet (6) qui peut se déplacer entre un premier siège de soupape (7), dans la première position, et un deuxième siège de soupape (9), dans la deuxième position.

9. Soupape selon la revendication 8, dans laquelle les moyens de rappel comprennent un ressort (8) qui entoure une tige (6A) du clapet (6).

10. Soupape selon l'une quelconque des revendications précédentes, dans laquelle la première entrée (2) est connectée à une source de fluide, la première sortie (3) est connectée pour envoyer le fluide à un composant, et la deuxième entrée (4) est connectée pour recevoir du fluide revenant du composant de telle manière que, en utilisation, à partir du moment où ladite pression a atteint le niveau prédéterminé, le débit de fluide allanat de la première entrée (2) à la première sortie (3) est maintenu à peu près constant mais qu'il est pratiquement interrompu lorsque les moyens moteurs (12) sont actionnés pour dépasser ledit équilibre et déplacer l'élément mobile (6) vers la deuxième position.

11. Soupape selon la revendication 10, dans laquelle le composant est un échangeur de chaleur appartenant à une unité de chauffage.

12. Soupape selon la revendication 11, rattachée à la revendication 3, dans laquelle les moyens capteurs captent la température et les moyens moteurs (12) sont actionnés à intervalles pour commander la circulation de fluide à travers l'échangeur de chaleur de sorte que les moyens capteurs sont maintenus à peu près à une température prédéterminée.

13. Soupape selon les revendications 11 et 12, dans laquelle l'échangeur de chaleur fait partie d'une unité de chauffage appartenant à un véhicule automobile, la première entrée de fluide (2) étant connectée pour recevoir de l'eau en provenance d'un circuit de refroidissement du moteur du véhicule.

COOLANT
FROM ENGINE

2

6          3

TO HEATER

7

1

10

8          6A

9          4

COOLANT
TO ENGINE          FROM HEATER

5

11

13

~12~

# FIG.1

1

FIG. 2

FIG.3.